# EUROPÄISCHE PATENTANMELDUNG

(11) **EP 4 016 138 A1**
(43) Veröffentlichungstag der Anmeldung: **22.06.2022**
(21) Anmeldenummer: 20214737.7
(22) Anmeldetag: 16.12.2020
(51) Int. Cl.: G01V 3/10

(54) **VORRICHTUNG ZUR DETEKTION VON METALLISCHEN OBJEKTEN IN UND AN SICH GEGENÜBER DER VORRICHTUNG BEWEGENDEN GEGENSTÄNDEN**

(71) Anmelder: Cassel Meßtechnik GmbH, 37127 Dransfeld (DE)
(72) Erfinder: SCHULZ, Matthias, 37120 Bovenden (DE)
(74) Vertreter: REHBERG HÜPPE + PARTNER

(57) **Zusammenfassung**

Eine Vorrichtung (1) zur Detektion von metallischen Objekten (2) in und an sich gegenüber der Vorrichtung (1) bewegenden Gegenständen (3) umfasst eine Sendeeinrichtung (10), um bei mehreren Arbeitsfrequenzen ein magnetisches Wechselfeld mit einer Sendespule (7) hervorzurufen, eine Empfangseinrichtung (11), um das von den sich bewegenden Gegenständen (3) beeinflusste magnetische Wechselfeld mit mindestens einer Empfangsspule (8, 9) zu detektieren und ein von dem detektierten magnetischen Wechselfeld abhängiges Empfangssignal auszugeben, eine Filtereinrichtung (14), um Teilsignale, die jeweils einer der Arbeitsfrequenzen zugeordnet sind, aus dem Empfangssignal heraus zu filtern, und eine Auswerteeinrichtung (13), um die Teilsignale auszuwerten. Die Sendespule (7) ist Teil eines mehrfach resonanten Schwingkreises (15) der Sendeeinrichtung (10), der bei jeder der mehreren Arbeitsfrequenzen eine Resonanzfrequenz aufweist, und/oder die mindestens eine Empfangsspule (8, 9) ist Teil eines mehrfach resonanten Schwingkreises (23) der Empfangseinrichtung (11), der bei jeder der mehreren Arbeitsfrequenzen eine Resonanzfrequenz aufweist.

## Beschreibung

### TECHNISCHES GEBIET DER ERFINDUNG

Die Erfindung betrifft eine Vorrichtung zur Detektion von metallischen Objekten in und an sich gegenüber der Vorrichtung bewegenden Gegenständen. Genauer betrifft die Erfindung eine solche Vorrichtung mit den Merkmalen des Oberbegriffs des unabhängigen Patentanspruchs 1.

Das nichtinvasive Untersuchen von Gegenständen darauf, ob sie metallische Objekte umfassen, wird auf verschiedenen technischen Gebieten durchgeführt. Ein Gebiet ist die Kontrolle von Produkten beispielsweise in der Lebensmittel- und in anderen Konsumgüterindustrien auf metallische Verunreinigungen. Ein anderes Gebiet ist der Schutz von Verarbeitungsmaschinen vor metallischen Objekten, die die Verarbeitungsmaschinen beschädigen könnten. Noch ein anderes Gebiet ist die Kontrolle von Personen auf mitgeführte Waffen, d. h. die untersuchten Gegenstände können auch Menschen sein. Dabei kommt es darauf an, festzustellen, ob der jeweilige Gegenstand, der beispielsweise aufgrund seines Wasser- und/oder Salzgehalts selbst elektrisch leitfähig sein kann, ein metallisches Objekt umfasst, welches ihn von einem ordnungsgemäßen oder ungefährlichen Gegenstand unterscheidet.

### STAND DER TECHNIK

Aus der EP 2 625 551 B1 ist ein Metalldetektionssystem mit einer Sendespule und zwei symmetrisch zu der Sendespule angeordneten und in Quadrupolkonfiguration in Reihe geschalteten Empfangsspulen bekannt. Die Sendespule ist an eine Sendereinheit angeschlossen, welche Sendesignale mit wählbaren Arbeitsfrequenzen ausgibt. Die in Reihe geschalteten Empfangsspulen sind über eine Filtereinrichtung an eine Auswerteinrichtung angeschlossen. Ohne ein metallisches Objekt in dem Metalldetektionssystem gleichen sich die in den beiden Empfangsspulen induzierten Spannungen aus. Wenn ein metallisches Objekt durch die Spulen hindurchgeführt wird, treten Empfangssignale auf, die von den Eigenschaften des metallischen Objekts abhängig sind. Die Auswerteinrichtung wertet die Empfangssignale bezüglich Phase und Amplitude aus. Dabei werden zunächst bei verschiedenen Arbeitsfrequenzen der Sendereinheit Phasen und Amplituden der zugehörigen Empfangssignale für das jeweilige Produkt mit einer Metallverunreinigung in verschiedenen Partikelgrößen bestimmt. Daraus werden mehrere Arbeitsfrequenzen ermittelt, bei denen die Unterschiede der Empfangssignale im Vergleich zu dem nicht verunreinigten Produkt besonders groß sind. Diese ermittelten Arbeitsfrequenzen werden dann im Betrieb des Metalldetektionssystems von der Sendereinheit gleichzeitig angewandt. In der Filtereinrichtung werden die Empfangssignale entsprechend gefiltert und dann getrennt voneinander in der Auswerteinrichtung ausgewertet.

Aus der EP 2 562 565 A1 ist eine Metalldetektionsvorrichtung mit einer eine Sendespule umfassenden Sendeeinrichtung und einer zwei in Quadrupolkonfiguration in Reihe geschalteten Empfangsspulen umfassenden Empfangseinrichtung bekannt, bei der die Sendespule Teil eines Parallelschwingkreises der Sendeeinrichtung ist. Die Resonanzfrequenz des Schwingkreises der Sendeeinrichtung ist die Arbeitsfrequenz der Sendespule. Die Arbeitsfrequenz ist umschaltbar, indem eine Kapazität in dem Parallelschwingkreis zwischen vorgegebenen Werten umschaltbar ist. So kann diese bekannte Metalldetektionsvorrichtung mit der im Einzelfall günstigsten Arbeitsfrequenz oder nacheinander mit verschiedenen Arbeitsfrequenzen betrieben werden.

Aus der DE 10 2012 013 554 A1 ist eine Metalldetektionsvorrichtung bekannt, bei der eine Sendespule Teil eines resonanten Schwingkreises einer Sendeeinrichtung ist und bei der zwei in Quadrupolkonfiguration in Reihe geschaltete Empfangsspulen Teil eines resonanten Schwingkreises einer Empfangseinrichtung sind. Eine Einrichtung zum Abgleich der Sendespule und der Empfangsspulen weist eine Kondensatordekade zum frei wählbaren Einstellen von Resonanzfrequenzen beider Schwingkreise auf. Die Schwingkreise können Parallelschwingkreise oder Reihenschwingkreise sein. Die jeweilige Resonanzfrequenz des Schwingkreises der Sendeeinrichtung ist die Arbeitsfrequenz der Sendespule, und die Resonanzfrequenz des Schwingkreises der Empfangseinrichtung ist auf diese Arbeitsfrequenz abgestimmt. Auf diese Weise wird die die Ansprechempfindlichkeit der Metalldetektionsvorrichtung gesteigert.

### AUFGABE DER ERFINDUNG

Der Erfindung liegt die Aufgabe zugrunde, eine Vorrichtung aufzuzeigen, die mit hoher Sensitivität metallische Objekte unterschiedlicher Größe an beliebiger Stelle in oder an gegenüber der Vorrichtung bewegten Gegenständen erkennt, auch wenn die Gegenstände selbst elektrisch leitfähig sind oder das Erkennen der metallischen Objekte ganz allgemein durch elektrische oder dielektrische Eigenschaften erschweren.

### LÖSUNG

Die Aufgabe der Erfindung wird durch eine Vorrichtung mit den Merkmalen des Patentanspruchs 1 gelöst. Die abhängigen Patentansprüche betreffen bevorzugte Ausführungsformen der erfindungsgemäßen Vorrichtung.

### BESCHREIBUNG DER ERFINDUNG

Bei einer erfindungsgemäßen Vorrichtung zur Detektion von metallischen Objekten in und an sich gegenüber der Vorrichtung bewegenden Gegenständen ruft eine Sendeeinrichtung mit einer Sendespule ein magnetisches Wechselfeld hervor, das mehrere Arbeitsfrequenzen aufweist. Eine Empfangseinrichtung der Vorrichtung detektiert das von den sich bewegenden Gegenständen beeinflusste Wechselfeld mit mindestens einer Empfangsspule und gibt ein von dem detektierten elektrischen Wechselfeld abhängiges Empfangssignal aus. Eine Filtereinrichtung der Vorrichtung filtert Teilsignale, die jeweils einer der Arbeitsfrequenzen zugeordnet sind, aus dem Empfangssignal heraus. Eine Auswerteeinrichtung der Vorrichtung wertet die Teilsignale aus. Um eine hohe Sensitivität der Vorrichtung zu erreichen, indem möglichst viele Informationen über etwaige metallische Objekte in den bewegten Gegenständen erlangt werden, ist die Sendespule Teil eines mehrfach resonanten Schwingkreises der Sendeeinrichtung, der bei jeder der mehreren Arbeitsfrequenzen eine Resonanzfrequenz aufweist, und/oder die mindestens eine Empfangsspule ist Teil eines mehrfach resonanten Schwingkreises der Empfangseinrichtung, der bei jeder der mehreren Arbeitsfrequenzen eine Resonanzfrequenz aufweist. Vorzugsweise weist sowohl die Sendeeinrichtung als auch die Empfangseinrichtung einen solchen mehrfach resonanten Schwingkreis auf, wobei die Resonanzfrequenzen der beiden Schwingkreise aufeinander abgestimmt sind.

Aufgrund der mehrfach resonanten Schwingkreise weist die erfindungsgemäße Vorrichtung bei mehreren Arbeitsfrequenzen eine hohe Ansprechempfindlichkeit und damit insgesamt eine sehr hohe Sensitivität für metallische Objekte auf. In der Sendeeinrichtung werden Anregungssignale der einzelnen Arbeitsfrequenzen zu einem Summensignal addiert. Die Addition kann zum Beispiel elektronisch oder in einem Signaltransformator am Eingang des mehrfach resonanten Schwingkreises der Sendeeinrichtung erfolgen. Es reicht aus, die Anregungen bei den einzelnen Arbeitsfrequenzen zu addieren. Auf der Empfangsseite wird das von der Empfangseinrichtung kommende Empfangssignal in der Filtereinrichtung so gefiltert, dass die jeweils einer der Arbeitsfrequenzen zugeordneten Teilsignale voneinander getrennt und dabei als solche möglichst nicht verändert werden. Dies kann beispielsweise durch Digitalisieren und anschließendes digitales Filtern des Empfangssignals realisiert werden. Eine bevorzugte Realisation des Filterns des Empfangssignals bezüglich seiner zu den einzelnen Arbeitsfrequenzen gehörigen Teilsignale wird weiter unten erläutert werden. Bei Verwendung der erfindungsgemäßen Vorrichtung fallen die Teilsignale mit einem vergleichsweise großen Signal zu Rauschverhältnis an und lassen sich daher von der Filtereinrichtung relativ einfach filtern und von der Auswerteinrichtung einfach auswerten. So sind auch kleinere metallische Objekte in und an den mit der erfindungsgemäßen Vorrichtung untersuchten Gegenständen detektierbar, auch wenn die Gegenstände selbst ausgeprägte elektrische und/oder dielektrische Eigenschaften aufweisen und daher das mit der Sendespule hervorgerufene magnetische Wechselfeld selbst stark beeinflussen, d. h. selbst zu einem hohen Empfangssignal führen, dessen relative Veränderungen durch ein zu detektierendes metallisches Objekt klein bleiben. Durch die mehreren gleichzeitig genutzten Arbeitsfrequenzen der Sendeeinrichtung werden diese Veränderungen durch das zu detektierende metallische Objekt gleichzeitig bei diesen verschiedenen Arbeitsfrequenzen und dabei mit hoher Wahrscheinlichkeit auch bei einer Arbeitsfrequenz erfasst, bei der sie gut erkennbar sind und so eine sichere Detektion des metallischen Objekts ermöglichen. Zudem können die gleichzeitigen Veränderungen des Empfangssignals durch das zu detektierende metallische Objekt bei den verschiedenen Arbeitsfrequenzen zueinander in Beziehung gesetzt werden, wodurch eine breitere Datenbasis für die sichere Detektion des metallischen Objekts gegeben ist.

Jeder mehrfach resonante Schwingkreis der erfindungsgemäßen Vorrichtung weist typischerweise miteinander verschaltete Teilschwingkreise auf und diese miteinander verschalteten Teilschwingkreise können jeweils einen Reihenschwingkreis und einen Parallelschwingkreis umfassen. Dass ein Schwingkreis bestehend aus einem Reihenschwingkreis und einem damit verschalteten Parallelschwingkreis mehrere, d. h. genau drei Resonanzen aufweist, ist grundsätzlich bekannt. Zwei der drei Resonanzen sind Parallelresonanzen mit einem lokalen Maximum der Impedanz. Die Parallelresonanzen entstehen aus dem gekoppelten Zusammenwirken der Induktivitäten und Kapazitäten beider miteinander verschalteter Teilschwingkreise und können in der Nähe ihrer jeweiligen Resonanzfrequenz für die Signale bei den Arbeitsfrequenzen der erfindungsgemäßen Vorrichtung genutzt werden. Die dritte Resonanz ist eine Reihenresonanz, bei der die Impedanz für ein Anregungssignal zur Anregung des Schwingkreises der Sendeeinrichtung bzw. das Empfangssignal zur Auskopplung aus dem Schwingkreis der Empfangseinrichtung ein lokales Minimum aufweist und ihre Resonanzfrequenz liegt zwischen den beiden Resonanzfrequenzen der Parallelresonanzen. Die Resonanzfrequenz der dritten Resonanz wird allein durch die von dem Parallelschwingkreis unbeeinflusste Reihenresonanz des Reihenschwingkreises bestimmt. Um drei oder mehr nutzbare Resonanzfrequenzen zu realisieren, sind in dem jeweiligen mehrfach resonanten Schwingkreis mehr als ein Reihenschwingkreis und ein Parallelschwingkreis miteinander zu verschalten. Jede zusätzliche Arbeitsfrequenz erhöht neben der Komplexität der mehrfach resonanten Schaltung den Aufwand, um in der Filtereinrichtung die Teilsignale, die jeweils einer der Arbeitsfrequenzen zugeordnet sind, aus dem Empfangssignal herauszufiltern und elektronisch aufzubereiten. Es kann daher praktisch sinnvoll sein, die Anzahl der als Arbeitsfrequenzen genutzten Resonanzfrequenzen auf zwei oder drei zu beschränken.

Bei der erfindungsgemäßen Vorrichtung kann die Sendeeinrichtung zwischen mehreren vorgegebenen Sätzen von Arbeitsfrequenzen umschaltbar sein, um die Arbeitsfrequenzen optimal an die zu überprüfenden Gegenstände, d. h. deren elektrische und dielektrische Eigenschaften, und auch an besonders relevante metallische Objekte anzupassen. Dann ist jeder mehrfach resonante Schwingkreis der Vorrichtung umschaltbar, um seine Resonanzfrequenzen auf den jeweiligen Satz von Arbeitsfrequenzen abzustimmen. Konkret kann dies dadurch realisiert sein, dass Kapazitäten aller in dem jeweiligen mehrfach resonanten Schwingkreis miteinander verschalteten Teilschwingkreise zwischen aufeinander abgestimmten, vorgegebenen Werten umschaltbar sind. Grundsätzlich reicht es zwar aus, nur eine Kapazität in einem der Teilschwingkreise des jeweiligen Schwingkreises umzuschalten, um auf einen anderen Satz von Arbeitsfrequenzen umzuschalten. Durch ein aufeinander abgestimmtes Umschalten, beispielsweise ein Vervierfachen, aller Kapazitäten kann jedoch die Höhe aller Resonanzfrequenzen des jeweiligen Schwingkreises um einen gleichen Faktor verändert werden, in dem gewählten Beispiel halbiert werden, so dass ihr Frequenzverhältnis gleich bleibt. Weiterhin ist es möglich, den Abstand der Resonanzfrequenzen jedes mehrfach resonanten Schwingkreises der Vorrichtung gezielt dadurch zu variieren, dass eine Induktivität in einem der Teilschwingkreise des jeweiligen Schwingkreises umgeschaltet wird. Sinnvoller Weise handelt es sich dabei um die Induktivität einer Spule oder Spulenanordnung, die nicht zugleich die Sendespule oder die mindestens eine Empfangsspule oder eine Empfangsspulenanordnung ist.

Bei der erfindungsgemäßen Vorrichtung erweist es sich als vorteilhaft, wenn jeder mehrfach resonante Schwingkreis bei jeder der mehreren Arbeitsfrequenzen, d. h. bei seiner entsprechenden Resonanzfrequenz, einen Gütefaktor von mindestens 10 aufweist, um die gewünschte Sensitivität zu erreichen. Je niedriger die jeweilige Arbeitsfrequenz ist, desto aufwändiger ist es, einen hohen Gütefaktor bei ihr zu erreichen. So liegt der Gütefaktor, der bei der niedrigsten der mehreren Arbeitsfrequenzen vorzugsweise erreicht wird, bei mindestens 15 und der Gütefaktor, der bei der höchsten der mehreren Arbeitsfrequenzen vorzugsweise erreicht wird, bei mindestens 30. Ein sehr hoher Gütefaktor des jeweiligen mehrfach resonanten Schwingkreises ist bei der erfindungsgemäßen Vorrichtung nicht erwünscht. Dies gilt insbesondere für Gütefaktoren von 100 oder mehr, weil bei zunehmendem Gütefaktor die Beeinflussung der Phase der Teilsignale bei der jeweiligen Arbeitsfrequenz durch die temperaturabhängigen Resonanzeigenschaften des Schwingkreises die Qualität der Signalauswertung zunehmend beeinträchtigen kann.

Als besonders günstig erweist es sich, die Filtereinrichtung der erfindungsgemäßen Vorrichtung so auszubilden, dass jedes der Teilsignale, das einer der Arbeitsfrequenzen zugeordnet ist, bezüglich aller anderen der Arbeitsfrequenzen oder auch bezüglich aller anderen Resonanzfrequenzen des mehrfach resonanten Schwingkreises der Empfangseinrichtung, sperrzufiltern. Eine Sperrfilterung der anderen Arbeits- bzw. Resonanzfrequenzen, die das Empfangssignal bei diesen anderen Arbeits- bzw. Resonanzfrequenzen stark unterdrückt, weist eine geringere Steigung des frequenzabhängigen Phasenverlaufs und damit eine geringere Empfindlichkeit gegenüber kleinen Frequenzverschiebungen und Temperaturdriften als eine schmalbandige Bandpassfilterung des durchzulassenden Teilsignals bei der ihm zugeordneten Arbeitsfrequenz auf. Insbesondere ergibt sich keine starke Frequenzabhängigkeit der Beeinflussung der Phase des Teilsignals bei der jeweiligen Arbeitsfrequenz. Dies ist wichtig, weil sich gewisse Verschiebungen der Arbeitsfrequenzen gegenüber den Filterfrequenzen, beispielsweise aufgrund thermischer Einflüsse, im Betrieb industrieller Vorrichtungen zur Detektion metallischer Objekte praktisch nicht vermeiden lassen. Die stärkste Beeinflussung des Empfangssignals durch die Sperrfilterung spielt sich im Frequenzraum jeweils weit entfernt von der zu dem jeweiligen Teilsignal zugehörigen Arbeitsfrequenz ab.

Bei einer Vorrichtung zur Detektion von metallischen Objekten in und an sich gegenüber der Vorrichtung bewegenden Gegenständen, die eine Sendeeinrichtung, um bei mehreren Arbeitsfrequenzen ein magnetisches Wechselfeld mit einer Sendespule hervorzurufen, eine Empfangseinrichtung, um das von den sich bewegenden Gegenständen beeinflusste magnetische Wechselfeld mit mindestens einer Empfangsspule zu detektieren und ein von dem detektierten magnetischen Wechselfeld abhängiges Empfangssignal auszugeben, eine Filtereinrichtung, um Teilsignale, die jeweils einer der Arbeitsfrequenzen zugeordnet sind, aus dem Empfangssignal heraus zu filtern, und eine Auswerteeinrichtung umfasst, um die Teilsignale auszuwerten, wird die Ausbildung der Filtereinrichtung derart, dass jedes der Teilsignale, das einer der Arbeitsfrequenzen zugeordnet ist, bezüglich aller anderen der Arbeitsfrequenzen oder auch bezüglich aller anderen Resonanzfrequenzen des mehrfach resonanten Schwingkreises der Empfangseinrichtung, sperrzufiltern, hiermit auch als eigenständige Erfindung offenbart. Damit ist gemeint, dass bei dieser eigenständigen Erfindung, die in den anhängenden Ansprüchen nicht beansprucht ist, weder die Sendeeinrichtung noch die Empfangseinrichtung einen mehrfach resonanten Schwingkreises oder überhaupt nur einen Schwingkreis mit der Sendespule bzw. der mindestens einen Empfangsspule aufweisen muss. Diese eigenständigen Erfindung kann aber alle weiteren hier erläuterten Merkmale der erfindungsgemäßen Vorrichtung aufweisen, die in den anhängenden Ansprüchen beansprucht ist, insbesondere die Merkmale von bevorzugten Ausführungsformen der Filtereinrichtung, die im Folgenden erläutert werden.

Um die Sperrfilterung in der Filtereinrichtung der erfindungsgemäßen Vorrichtung umzusetzen, kann diese für jedes der Teilsignale und jede der anderen der Arbeitsfrequenzen und der Resonanzfrequenzen des mehrfach resonanten Schwingkreises der Empfangseinrichtung eine Gruppe von Kerbfiltern aufweisen. Diese Gruppe von Kerbfiltern umfasst ein erstes Kerbfilter mit einer ersten mittleren Filterfrequenz, die vorzugsweise auf die jeweilige der anderen der Arbeitsfrequenzen abgestimmt ist. Weiter umfasst die Gruppe von Kerbfiltern ein zweites und ein drittes Kerbfilter mit einer zweiten und einer dritten mittleren Filterfrequenz, die um jeweils 1 % bis 10 % niedriger bzw. höher als die mittlere Filterfrequenz sind. Die Gruppe von Kerbfiltern weist so insgesamt ein Transmissionsspektrum mit einem tieferen und breiteren Sperrbereich als ein einzelnes Kerbfilter auf.

Die Filtereinrichtung der erfindungsgemäßen Vorrichtung kann weiterhin für jedes Teilsignal ein Bandpassfilter oder ein Tiefpassfilter oder ein Hochpassfilter aufweisen, wobei jede Kante des jeweiligen Filters einen Abstand von mindestens 10 % der Arbeitsfrequenz zu der Arbeitsfrequenz einhält, der das jeweilige Teilsignal zugeordnet ist. Selbst wenn die Filtereinrichtung also doch ein Bandpassfilter für die jeweilige Arbeitsfrequenz aufweist, ist dieses Bandpassfilter sehr breit mit einem großen Abstand seiner Kanten zu der Arbeitsfrequenz und entsprechend geringer Beeinflussung des Teilsignals bei der Arbeitsfrequenz. Vorzugsweise beträgt der Abstand jeder Kante des jeweiligen Filters von der jeweiligen Arbeitsfrequenz 20 % und noch mehr bevorzugt 30 % der Arbeitsfrequenz.

Die Auswerteeinrichtung der erfindungsgemäßen Vorrichtung kann in grundsätzlich bekannter Weise dazu ausgebildet sein, jedes der Teilsignale mit einem Referenzsignal von der dem jeweiligen Teilsignal zugeordneten Arbeitsfrequenz, bezüglich enthaltener Phaseninformationen zu demodulieren.

Weiterhin kann die Empfangseinrichtung in ebenfalls grundsätzlich bekannter Weise zwei gleiche Empfangsspulen aufweisen, die vorzugsweise dieselbe Geometrie wie die Sendespule aufweisen, die symmetrisch in zu der Sendespule parallelen Ebenen angeordnet sind und die in der Empfangseinrichtung, insbesondere in dem Schwingkreis der Empfangseinrichtung in Quadrupolkonfiguration in Reihe geschaltet sind. So tritt nur dann ein Empfangssignal in der Empfangseinrichtung auf, wenn die Symmetrie dieses Aufbaus durch einen Gegenstand gestört wird, der das von der Sendespule ausgehende magnetische Wechselfeld auf der einen Seite der Sendespule anders beeinflusst als auf der anderen. Eine derartige Störung der Symmetrie geht mit jedem sich gegenüber der Vorrichtung, insbesondere durch deren Spulen hindurch bewegenden Gegenstand einher. Dabei hängt der Verlauf der Störung von dem jeweiligen Gegenstand und seinen elektrischen und dielektrischen Eigenschaften ab. Eine zusätzliche Störung ergibt sich bei einem metallischen Objekt in oder an dem jeweiligen Gegenstand. Der Verlauf dieser zusätzlichen Störung hängt von der Größe, Form und dem Material des metallischen Objekts sowie seiner Lage in oder an dem jeweiligen Gegenstand ab. Daher lässt der von der Bewegung des Gegenstands gegenüber der Vorrichtung abhängige Verlauf der Störung und des daraus in der Empfangseinrichtung resultierenden Empfangssignals Rückschlüsse darauf zu, ob der jeweilige Gegenstand ein metallisches Objekt umfasst. Zusätzlich können Rückschlüsse auf die Lage, Art und/oder Größe eines metallischen Objekts in dem jeweiligen Gegenstand möglich sein.

Auch dann wenn grundsätzlich gleiche Empfangsspulen symmetrisch in zu der Sendespule parallelen Ebenen angeordnet und in der Empfangseinrichtung in Quadrupolkonfiguration in Reihe geschaltet sind, kann in der Praxis schon vor der Beeinflussung des mit der Sendespule hervorgerufenen magnetischen Wechselfelds durch gegenüber der erfindungsgemäßen Vorrichtung bewegte Gegenstände ein von null verschiedenes Empfangssignal auftreten. Daher ist es grundsätzlich bekannt, eine Abgleicheinrichtung vorzusehen, die dazu ausgebildet ist, das Empfangssignal bei der jeweiligen Arbeitsfrequenz der Vorrichtung gegen null abzustimmen, wenn das magnetische Wechselfeld noch nicht von den bewegten Gegenständen beeinflusst ist. Bei der erfindungsgemäßen Vorrichtung ist diese Abstimmung für alle der mehreren Arbeitsfrequenzen zugleich vorzunehmen. Dazu weist die erfindungsgemäße Vorrichtung vorzugsweise für jede der Arbeitsfrequenzen eine eigene, d. h. separate Abgleicheinrichtung mit geringer Querwirkung auf die Signalanteile bei der jeweils anderen Arbeitsfrequenz auf.

Konkret kann eine der Abgleicheinrichtungen, insbesondere die Abgleicheinrichtung für die höchste der Arbeitsfrequenzen, mindestens einen Kondensator oder einen ohmschen Widerstand aufweisen, der mit einer der beiden Empfangsspulen parallelgeschaltet ist, um die Eigenschaften der beiden Empfangsspulen bei dieser Arbeitsfrequenz direkt in dem Schwingkreis der Empfangseinrichtung abzugleichen. Zum Abgleichen des Empfangssignals bei der Arbeitsfrequenz gegen null kann der Kondensator und/oder der ohmsche Widerstand stufenlos verstellbar sein. Da die relevanten Eigenschaften der beiden Empfangsspulen und damit auch ihre Unterschiede aber in der Regel konstant bleiben, kann die eine der Abgleicheinrichtungen auch fest bestückt sein.

Die separate Abgleicheinrichtung für jede weitere der Arbeitsfrequenzen kann einen Transformator aufweisen, an dessen Primärwicklung ein Teil eines Anregungssignals anliegt, welcher in erster Linie zur Anregung der Sendeeinrichtung bei der zugehörigen Arbeitsfrequenz verwendet wird. Die Sekundärwicklung dieses Transformators weist zwei Wicklungshälften und einen Mittelpunkt zwischen den beiden Wicklungshälften auf. Der Mittelpunkt der Sekundärwicklung ist an einen Signalausgang der Empfangseinrichtung für das Empfangssignal angeschlossen. Dabei ist mindestens ein Kondensator oder ein ohmscher Widerstand mit einer der Wicklungshälften der Sekundärwicklung zu dem Signalausgang hin parallel geschaltet. Über den Transformator wird also dem Signalausgang der Empfangseinrichtung ein Abgleichssignal bei der jeweiligen Arbeitsfrequenz addiert, das durch Dimensionierung oder falls möglich Verstellung der parallel geschalteten ohmschen Widerstände und Kondensatoren hinsichtlich seiner Phase und Amplitude einstellbar ist. Damit kann das Empfangssignal auch bei der jeweiligen weiteren Arbeitsfrequenz gegen null abgeglichen werden. Da die relevanten Eigenschaften der beiden Empfangsspulen und damit auch ihre Unterschiede, wie bereits erwähnt wurde, in der Regel konstant bleiben, kann jede separate Abgleicheinrichtung für jede weitere der Arbeitsfrequenzen ebenfalls fest bestückt sein.

Zusätzlich können die von der Filtereinrichtung der erfindungsgemäßen Vorrichtung ausgegebenen Teilsignale, die jeweils einer der Arbeitsfrequenzen zugeordnet sind, derart geregelt mit Signalen addiert werden, die aus dem entsprechenden Teil des Anregungssignals für die Sendeeinrichtung abgeleitet werden, dass die Teilsignale im zeitlichen Mittel null sind. Dieses Ausregeln kann Alterungen und Temperaturdriften ausgleichen, erfolgt aber so langsam, dass es die Änderungen der Teilsignale durch die gegenüber der Vorrichtung bewegten Gegenstände nicht signifikant abschwächt.

Durch all diese Maßnahmen können die Filtereinrichtung und die Auswerteeinrichtung der erfindungsgemäßen Vorrichtung stärker an die informationshaltigen Anteile des Empfangssignals angepasst werden.

Die Auswerteeinrichtung der erfindungsgemäßen Vorrichtung ist vorzugsweise dazu ausgebildet, bei den mehreren Arbeitsfrequenzen erlangte Informationen miteinander in Beziehung zu setzen, um die metallischen Objekte in und an den sich gegenüber der Vorrichtung bewegenden Gegenständen zu detektieren. Beispielsweise kann ein Verlauf eines Verhältnisses oder einer Differenz der Teilsignale bzw. daraus erlangter Phaseninformationen betrachtet werden. Die Verläufe dieser Werte können stärker von bestimmten Eigenschaften der metallischen Objekte abhängen als die einzelnen betrachteten Teilsignale bzw. unmittelbar daraus abgeleitete Informationen.

Konkret können die bei den mehreren Arbeitsfrequenzen erlangten Informationen abhängig von den zugehörigen Zeitpunkten, zu denen das ihnen zugrundeliegende Empfangssignal registriert wurde, miteinander in Beziehung gesetzt werden. Alternativ können die bei den mehreren Arbeitsfrequenzen erlangten Informationen abhängig von den zugehörigen Positionen des jeweiligen Gegenstands gegenüber der Vorrichtung miteinander in Beziehung gesetzt werden. Oft sind diese zeitlichen und räumlichen Betrachtungen aber gleichwertig, weil sich die Gegenstände, die mit der erfindungsgemäßen Vorrichtung untersucht werden, beispielsweise auf einem Förderband mit gleichbleibender Geschwindigkeit gegenüber der Vorrichtung bewegen. Dass sich die Gegenstände gegenüber der erfindungsgemäßen Vorrichtung bewegen, kann konkret beuten, dass die Gegenstände durch die Sendespule und alle Empfangsspulen der Vorrichtung hindurch gefördert werden, und zwar in einer senkrecht zu den Spulenebenen verlaufenden Förderrichtung. Es ist aber beispielsweise auch möglich, die Gegenstände in einer parallel oder auch nur längs den Spulenebenen verlaufenden Förderrichtung an der Sendespule und allen Empfangsspulen der Vorrichtung vorbei zu fördern.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für den unabhängigen Patentanspruch des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Reihenschwingkreis die Rede ist, ist dies so zu verstehen, dass genau ein Reihenschwingkreis, zwei Reihenschwingkreise oder mehr Reihenschwingkreise vorhanden sind. Die in den Patentansprüchen aufgeführten Merkmale können durch weitere Merkmale ergänzt werden oder die einzigen Merkmale sein, die die jeweilige Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Ansicht einer Ausführungsform der erfindungsgemäßen Vorrichtung.
- **Fig. 2**: zeigt eine erste Ausführungsform eines Schwingkreises einer Sendeeinrichtung der Vorrichtung gemäß Fig. 1.
- **Fig. 3**: zeigt eine erste Ausführungsform eines Schwingkreises einer Empfangseinrichtung der Vorrichtung gemäß Fig. 1.
- **Fig. 4**: zeigt eine zweite Ausführungsform des Schwingkreises der Sendeeinrichtung der Vorrichtung gemäß Fig. 1.
- **Fig. 5**: zeigt eine der Ausführungsform des Schwingkreises gemäß Fig. 4 entsprechende zweite Ausführungsform des Schwingkreises der Empfangseinrichtung der Vorrichtung gemäß Fig. 1 mit schaltbaren Kapazitäten.
- **Fig. 6**: zeigt eine Variante der Ausführungsform des Schwingkreises der Empfangseinrichtung gemäß Fig. 5 mit einer zusätzlichen schaltbaren Induktivität.
- **Fig. 7**: zeigt eine auf der Ausführungsform des Schwingkreises der Empfangsreinrichtung gemäß Fig. 3 aufbauende weitere Ausführungsform des Schwingkreises der Empfangseinrichtung der Vorrichtung gemäß Fig. 1 mit schaltbaren Kapazitäten.
- **Fig. 8**: zeigt eine Variante der Ausführungsform des Schwingkreises der Empfangseinrichtung gemäß Fig. 8 mit einer zusätzlichen schaltbaren Induktivität.
- **Fig. 9**: ist eine Prinzipdarstellung einer ersten Ausführungsform einer Filtereinrichtung der Vorrichtung gemäß Fig. 1.
- **Fig. 10**: ist eine Prinzipdarstellung einer zweiten Ausführungsform der Filtereinrichtung der Vorrichtung gemäß Fig. 1.
- **Fig. 11**: illustriert die Ausbildung eines Sperrfilters der Filtervorrichtung gemäß Fig. 9 oder 10 aus einer Gruppe von drei einzelnen Kerbfiltern.
- **Fig. 12**: zeigt ein resultierendes Transmissionsspektrum der Gruppe von Kerbfiltern gemäß Fig. 11.
- **Fig. 13**: illustriert eine Ausführungsform einer Auswerteeinrichtung der Vorrichtung gemäß Fig. 1; und
- **Fig. 14**: ist eine schematische Ansicht einer weiteren Ausführungsform der erfindungsgemäßen Vorrichtung mit zusätzlichen Abgleicheinrichtungen.

### FIGURENBESCHREIBUNG

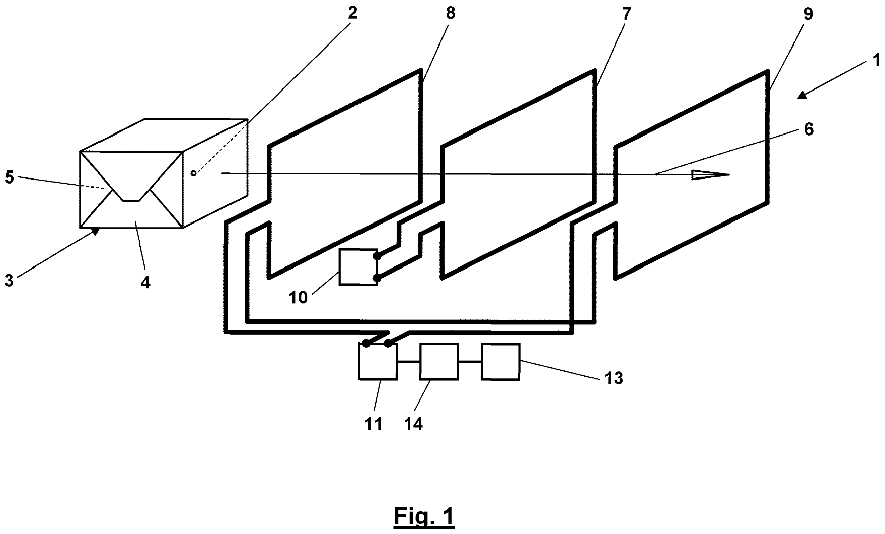

Die in **Fig. 1** in einer Ausführungsform dargestellte Vorrichtung 1 dient zur Detektion von metallischen Objekten 2 in oder an Gegenständen 3, die gegenüber der Vorrichtung bewegt werden. In Fig. 1 ist als Gegenstand 3 ein in einer Schachtel 4 verpacktes Produkt 5 gezeigt, in dem sich ein metallisches Objekt 2 befinden möge. Der Gegenstand 3 wird in einer Förderrichtung 6, beispielsweise auf einem hier nicht dargestellten Förderband, durch Spulen 7 bis 9 der Vorrichtung 1 hindurchbewegt. Die hier jeweils nur mit einer Windung dargestellten Spulen 7 bis 9 können auch mehrere Windungen aufweisen. Die mittlere Spule ist eine Sendespule 7, die Teil einer Sendeeinrichtung 10 ist. Die äußeren Spulen sind zwei Empfangsspulen 8 und 9. Die Empfangsspulen 8 und 9 sind symmetrisch zu der Sendespule 7 in zu der Sendespule 7 parallelen Ebenen angeordnet, und zwar typischerweise näher bei der Sendespule 7 als dies Fig. 1 suggeriert. Die Empfangsspulen 8 und 9 können dieselbe Geometrie, d. h. geometrische Form und Größe, wie die Sendespule 7 aufweisen. Die Empfangsspulen 8 und 9 sind Teile einer Empfangseinrichtung 11 und dabei in Quadrupolkonfiguration in Reihe geschaltet. Die Sendeeinrichtung 10 ist dazu ausgebildet, mit der Sendespule 7 ein magnetisches Wechselfeld hervorzurufen. Die Empfangseinrichtung 11 detektiert das magnetische Wechselfeld mit den Empfangsspulen 8 und 9. Dabei fällt wegen der symmetrischen Anordnung und der Verschaltung der Empfangsspulen 8 und 9 in Quadrupolkonfiguration kein Empfangssignal an, so lange auch die magnetische Konfiguration in der Vorrichtung 1 symmetrisch zu der Sendespule 7 ist. Wenn sich der Gegenstand 3 durch die Spulen 7 bis 9 hindurchbewegt, wird die Symmetrie der magnetischen Konfiguration gestört und es kommt zu einem für den Gegenstand 3 charakteristischen Verlauf des Empfangssignals über dessen Weg durch die Vorrichtung 1. Wenn in oder an dem Gegenstand 3 das metallische Objekt 2 vorliegt, entsteht ein signifikant anderer charakteristischer Verlauf des Empfangssignals als ohne das metallische Objekt 2. Dabei ist der jeweilige Verlauf des Empfangssignals auch von der Arbeitsfrequenz abhängig, mit der das magnetische Wechselfeld mit der Sendespule 7 hervorgerufen wird. Die Vorrichtung 1 ist dazu ausgebildet, dass die Sendeeinrichtung 10 das magnetische Wechselfeld mit mehreren Arbeitsfrequenzen gleichzeitig mit der Sendespule 7 hervorruft und dass das Empfangssignal von den Empfangsspulen 8 und 9 bei jeder dieser Arbeitsfrequenzen zunächst getrennt ausgewertet wird. Dazu ist zwischen die Empfangseinrichtung 11 und eine Auswerteeinrichtung 13 eine Filtereinrichtung 14 geschaltet, die aus dem Empfangssignal Teilsignale herausfiltert, die jeweils einer der Arbeitsfrequenzen entsprechen. Diese Teilsignale werden von der Auswerteeinrichtung 13 ausgewertet.

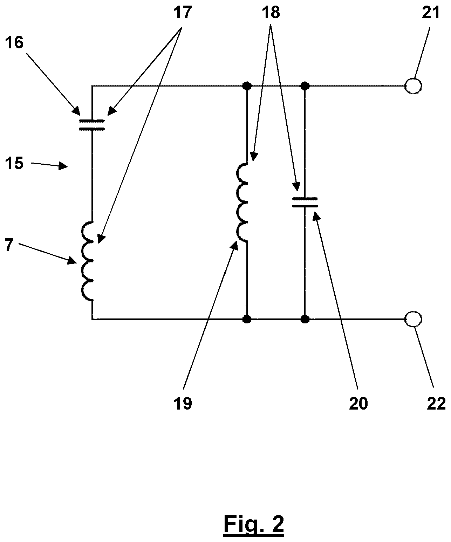

**Fig. 2** zeigt einen mehrfach resonanten Schwingkreis 15, der Teil einer Ausführungsform der Sendeeinrichtung 10 gemäß Fig. 1 ist und der die Sendespule 7 umfasst. Die Sendespule 7 ist zusammen mit einem ersten Kondensator 16 Teil eines Reihenschwingkreises 17, der mit einem Parallelschwingkreis 18 aus einer zweiten Spule 19 und einem zweiten Kondensator 20 verschaltet ist. Der Schwingkreis 15 weist mehrere Resonanzfrequenzen auf, die als Arbeitsfrequenzen nutzbar sind. Der Schwingkreis 15 ist über Anschlüsse 21 und 22 zu Schwingungen und entsprechend zum Hervorrufen magnetischer Wechselfelder über die Sendespule 7 anregbar. Statt die Spule des Reihenresonanzkreises 17 als Sendespule 7 zu verwenden, könnte auch die Spule 19 des Parallelresonanzkreises 18 als Sendespule verwendet werden.

Ein mehrfach resonanter Schwingkreis der Empfangseinrichtung 11 kann grundsätzlich genauso aufgebaut sein wie der Schwingkreis 15 gemäß Fig. 2, wobei an der Stelle der Sendespule 7 die beiden Empfangsspulen 8 und 9 in Quadrupolkonfiguration in Reihe geschaltet sind.

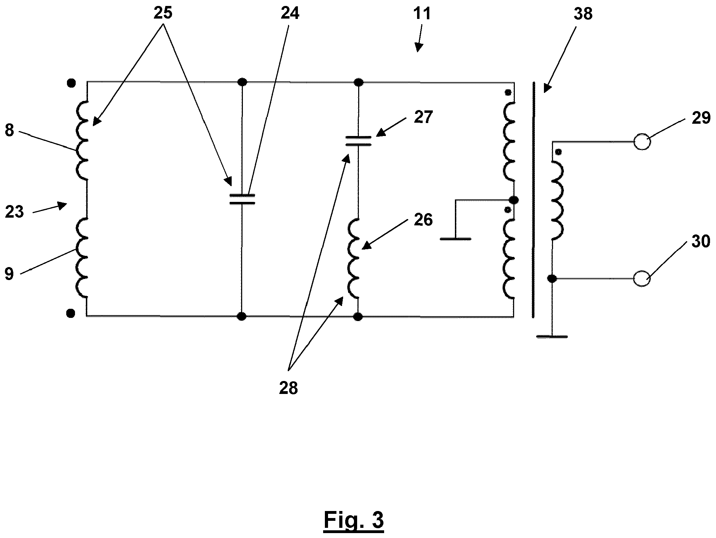

**Fig. 3** zeigt einen mehrfach resonanten Schwingkreis 23 der Empfangseinrichtung 11, bei dem die Empfangsspulen 8 und 9 zusammen mit einem Kondensator 24 einen als Parallelschwingkreis 25 ausgebildeten Teilschwingkreis ausbilden. Eine weitere Spule 26 und ein weiterer Kondensator 27 bilden einen damit verschalteten Reihenschwingkreis 28 aus. Fig. 3 zeigt weiter an, wie das zunächst symmetrische Empfangssignal der Empfangseinrichtung 11 über einen Transformator 38 mit angepasster Impedanz und unsymmetrisch an Anschlüssen 29 und 30 an die Filtereinrichtung 14 gemäß Fig. 1 bereitstellbar ist. Dabei weisen die Primärseite und die Sekundärseite des Transformators 38 einen festen Massebezug auf. Der Transformator 38 ist so ausgelegt, dass sein Einfluss auf den mehrfach resonanten Schwingkreis 23 klein bleibt. Der Transformator 38 kann vorgesehen sein, die Spannung des Empfangssignals an den Anschlüssen 29 und 30 zu erhöhen. Ein dem Transformator 38 entsprechender Transformator kann auch bei der Sendeeinrichtung 10 vorgesehen sein, um einen Signalgenerator mit angepasster Impedanz und Symmetrie eines von ihm bereitgestellten Anregungssignals an den Schwingkreis 15 anzuschließen. Damit ist der Transformator 38 eine Option bei allen in den Fig. 2 bis 8 gezeigten Schwingkreisen.

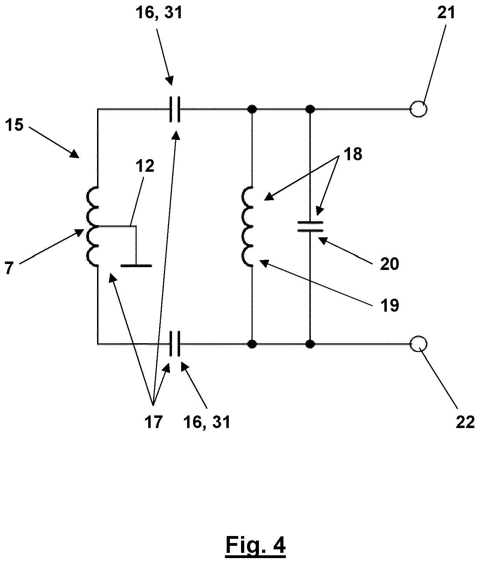

Gemäß **Fig. 4****,** die wieder den Schwingkreis 15 der Sendeeinrichtung 10 zeigt, ist der Kondensator 16 des Reihenschwingkreises 17 in zwei gleiche Teilkondensatoren 31 aufgeteilt. Damit ist der Reihenschwingkreis 17 und auch der gesamte Schwingkreis 15 symmetrisch zu einem Mittelpunkt der Sendespule 7. Außerdem wird eine galvanische Entkopplung erreicht, die es erleichtert, die Sendespule 7 mit einem festen Potentialbezug zu versehen. Gemäß Fig. 4 ist der Mittelpunkt der Sendespule 7 über einen Mittelpunktanzapf 12 mit Masse verbunden. Dadurch ergibt sich eine symmetrische Aussteuerung der Sendespule 7. Statt der dargestellten direkten Verbindung des Mittelpunkts der Sendespule 7 mit Masse kann auch eine Verbindung über einen gegenüber der Impedanz der Sendepule 7 bei den Arbeitsfrequenzen hochohmigen Widerstand gegeben sein. Weiterhin könnten die Enden der Sendespule 7 über gleiche hochohmige Widerstände mit Masse verbunden sein, um den Potentialbezug zu bewirken.

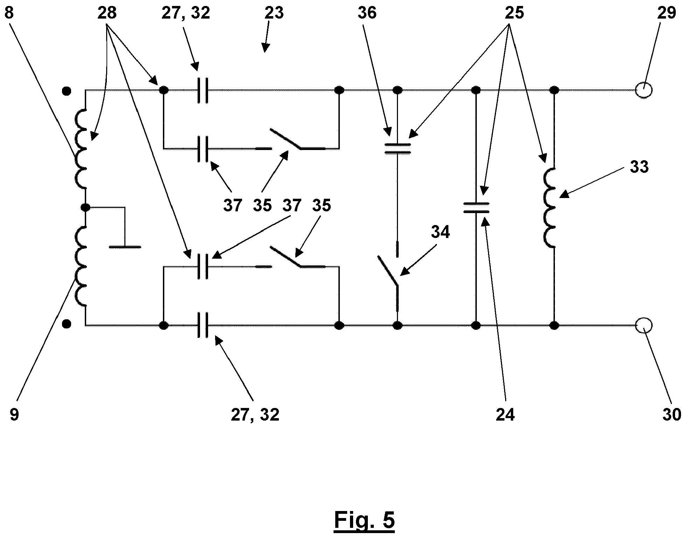

**Fig. 5** zeigt eine dem Schwingkreis 15 der Sendeeinrichtung 10 gemäß Fig. 4 entsprechende Ausbildung des Schwingkreises 23 der Empfangseinrichtung 11. Dabei sind die Empfangsspulen 8 und 9 Teil des Reihenschwingkreises 28, in dem der Kondensator 27 aus Fig. 3 in Teilkondensatoren 32 aufgeteilt ist, und eine weitere Spule 33 bildet zusammen mit dem Kondensator 24 den Parallelschwingkreis 25 aus. Der Mittelpunkt zwischen den Empfangsspulen 8 und 9 ist an Masse angeschlossen, um ein Bezugspotential vorzugeben. Dabei kann statt der dargestellten direkten Verbindung des Mittelpunkts mit Masse auch eine Verbindung über einen gegenüber der Impedanz der Empfangsspulen 8 und 9 bei den Arbeitsfrequenzen hochohmigen Widerstand gegeben sein. Weiterhin könnten die voneinander abgekehrten äußeren Enden der beiden Empfangsspulen 8 und 9 über gleiche hochohmige Widerstände mit Masse verbunden sein, um den Potentialbezug zu bewirken.

Es sind weitere Schaltungsvarianten möglich, um mehrfach resonante Schwingkreise 15 und 23 der Sendeeinrichtung 10 und der Empfangseinrichtung 11 auszubilden. Entscheidend ist, dass mehrere Resonanzfrequenzen als Arbeitsfrequenzen für die Sendeeinrichtung 10 oder in der Empfangseinrichtung 11 zur Abstimmung auf Arbeitsfrequenzen der Sendeeinrichtung zur Verfügung stehen. Die genaue Lage der Resonanzfrequenzen wird durch die Kapazitäten der Kondensatoren 16, 20, 24, 27 und die Induktivitäten der Spulen 7 bis 9, 19, 26, 33 der Teilschwingkreise der Schwingkreise 15 und 23 bestimmt. Durch geeignete Auswahl dieser Kapazitäten und Induktivitäten lassen sich die Resonanzfrequenzen der Schwingkreise 15, 23 auf gewünschte Werte abstimmen.

**Fig. 5** zeigt zudem, wie mit Hilfe von Schaltern 34 und 35 durch paralleles Zuschalten weiterer Kondensatoren 36 und 37 die Kapazitäten in dem Parallelschwingkreis 25 und dem Reihenschwingkreis 28 erhöht werden können. Auf diese Weise werden die Resonanzfrequenzen des Schwingkreises 23 zu kleineren Frequenzen hin verschoben, wobei ein Frequenzverhältnis der Resonanzfrequenzen erhalten bleiben kann.

In einem konkreten Ausführungsbeispiel des Schwingkreises 23 der Empfangseinrichtung 11 gemäß Fig. 5 für eine Vorrichtung 1 zur Detektion von metallischen Objekten 2 mit höheren Arbeitsfrequenzen beträgt dann, wenn nur die Kapazitäten der Teilkondensatoren 32 und des Kondensators 24 aktiv sind, die niedrigere der beiden Arbeitsfrequenzen 150 kHz und die höhere der beiden Arbeitsfrequenzen 600 kHz. Wenn die Kapazitäten in dem Parallelschwingkreis 25 und dem Reihenschwingkreis 28 durch paralleles Zuschalten der weiteren Kondensatoren 36 und 37 vervierfacht werden, halbiert sich die niedrigere der beiden Arbeitsfrequenzen auf 75 kHz und die höhere der beiden Arbeitsfrequenzen auf 300 kHz. Das Frequenzverhältnis der beiden Arbeitsfrequenzen von 1:4 ändert sich dabei nicht.

In einem konkreten Ausführungsbeispiel des Schwingkreises 23 der Empfangseinrichtung 11 gemäß Fig. 5 für eine Vorrichtung 1 zur Detektion von metallischen Objekten 2 mit niedrigeren Arbeitsfrequenzen beträgt dann, wenn nur die Kapazitäten der Teilkondensatoren 32 und des Kondensators 24 aktiv sind, die niedrigere der beiden Arbeitsfrequenzen 75 kHz und die höhere der beiden Arbeitsfrequenzen 300 kHz. Wenn die Kapazitäten in dem Parallelschwingkreis 25 und dem Reihenschwingkreis 28 durch paralleles Zuschalten der weiteren Kondensatoren 36 und 37 vervierfacht werden, halbiert sich die niedrigere der beiden Arbeitsfrequenzen auf 37,5 kHz und die höhere der beiden Arbeitsfrequenzen auf 150 kHz. Das Frequenzverhältnis der beiden Arbeitsfrequenzen von auch hier 1:4 ändert sich dabei nicht.

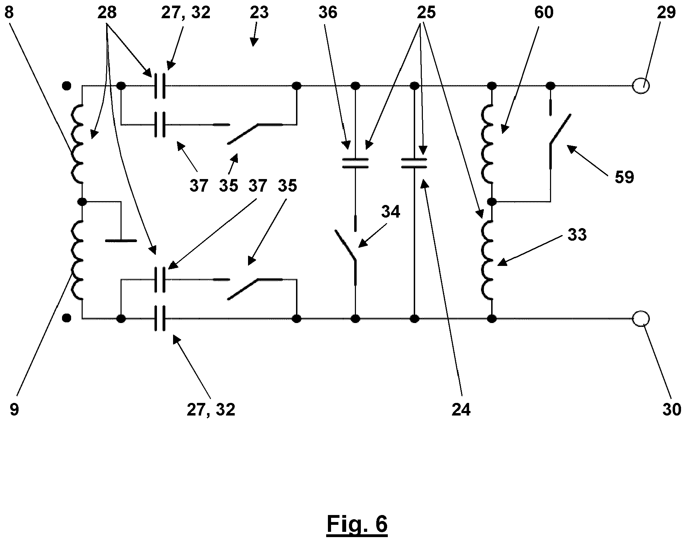

**Fig. 6** zeigt, wie das Frequenzverhältnis der Resonanzfrequenzen verändert werden kann, indem hier durch Öffnen eines Schalters 59 und ein damit einhergehendes in Reihe Schalten einer zunächst kurzgeschlossenen weiteren Spule 60 mit der Spule 33 die Induktivität des Parallelschwingkreises 25 erhöht wird.

Gegenüber dem oben angegebenen konkreten Ausführungsbeispiel des Schwingkreises 23 der Empfangseinrichtung 11 gemäß Fig. 5 für eine Vorrichtung 1 mit zugeschalteten weiteren Kondensatoren 36 und 37 und den resultierenden Arbeitsfrequenzen von 75 kHz und 300 kHz bewirkt die Erhöhung der Induktivität des Parallelschwingkreises 25 durch die weitere Spule 60 bei gleichzeitiger Verringerung der Kapazität des Parallelschwingkreises 25 durch Öffnen des Schalters 34 eine selektive Verdopplung der höheren der beiden Arbeitsfrequenzen auf 600 kHz. Das Frequenzverhältnis der beiden Arbeitsfrequenzen verdoppelt sich entsprechend von 1:4 auf 1:8.

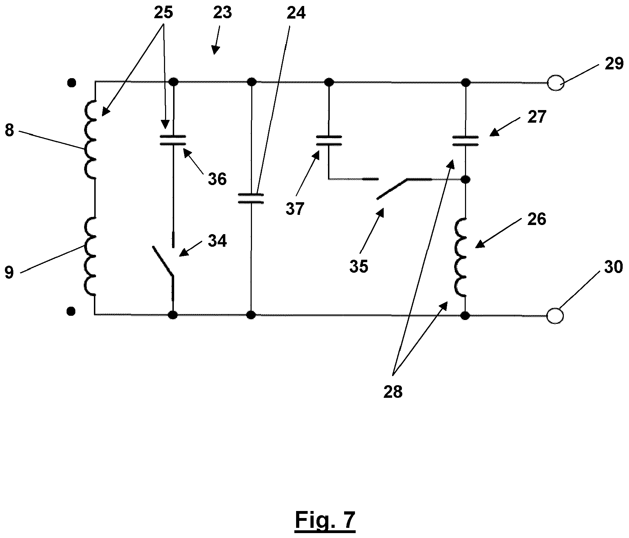

**Fig. 7** zeigt, wie bei dem mehrfach resonanten Schwingkreis 23 in der grundsätzlichen Ausführungsform gemäß Fig. 3, in der die Empfangsspulen 8 und 9 Teil des Parallelschwingkreises sind, die Kapazitäten in allen Teilschwingkreisen durch die mit den Schaltern 34 und 35 zuschaltbaren Kondensatoren 36 und 37 erhöht werden können. Mit dem Zuschalten der Kondensatoren 36 und 37 werden alle Resonanzfrequenzen des Schwingkreises 23 abgesenkt, mit Ihrem Abschalten erhöht.

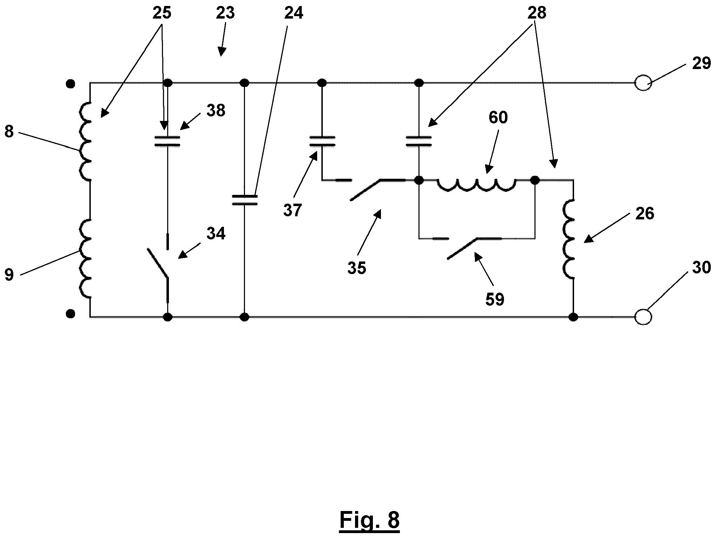

**Fig. 8** zeigt, wie zusätzlich das Frequenzverhältnis der Resonanzfrequenzen verändert werden kann, indem hier durch Öffnen des Schalters 59 und ein damit einhergehendes in Reihe Schalten der zunächst kurzgeschlossenen weiteren Spule 60 mit der Spule 26 die Induktivität des Reihenschwingkreises 28 erhöht wird.

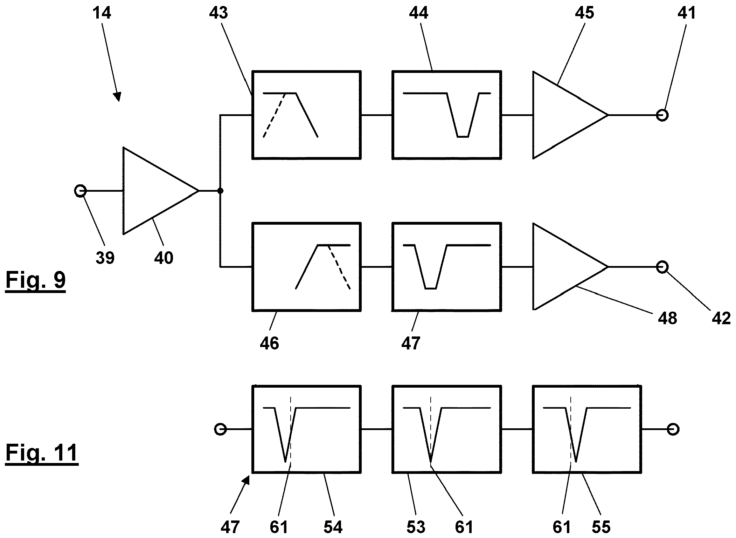

**Fig. 9** illustriert eine Ausführungsform der Filtereinrichtung 14 gemäß Fig. 1 für den Fall, dass die Vorrichtung 1 gleichzeitig bei zwei Arbeitsfrequenzen betrieben wird. An einen Signaleingang 39 ist ein Eingangsverstärker 40 angeschlossen. Daran schließen sich zu zwei Signalausgängen 41 und 42 hin zwei unterschiedliche Signalverarbeitungspfade an. In dem einen Signalverarbeitungspfad ist ein Tiefpassfilter 43 mit einem bei der höheren der beiden Arbeitsfrequenzen wirksamen Sperrfilter 44 sowie einem Ausgangsverstärker 45 in Reihe geschaltet, so dass an dem Ausgangsanschluss 41 ein Teilsignal mit der niedrigeren der beiden Arbeitsfrequenzen anliegt. In dem anderen Signalverarbeitungspfad ist ein Hochpassfilter 46 mit einem bei der niedrigeren der beiden Arbeitsfrequenzen wirksamen Sperrfilter 47 sowie einem Ausgangsverstärker 48 in Reihe geschaltet, so das an dem Ausgangsanschluss 42 ein Teilsignal mit der höheren der beiden Arbeitsfrequenzen anliegt. Die beiden Ausgangsanschlüsse 41 und 42 sind an die Auswerteeinrichtung 13 gemäß Fig. 1 angeschlossen.

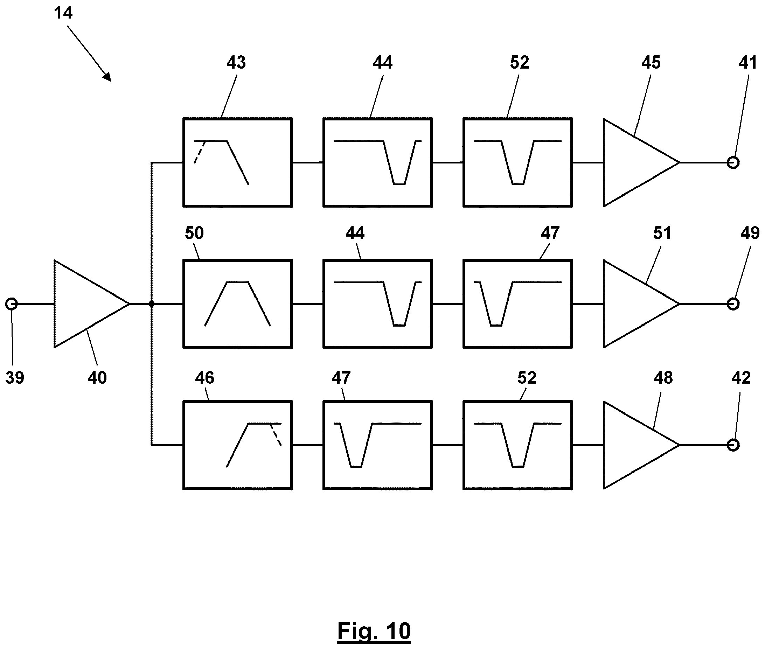

**Fig. 10** zeigt eine Ausführungsform der Filtereinrichtung 14 für drei Arbeitsfrequenzen der Vorrichtung 1. Hier gibt es entsprechend einen zusätzlichen Signalausgang 49 für ein drittes Teilsignal. In dem Signalpfad zu dem zusätzlichen Signalausgang 49 ist ein breitbandiges Bandpassfilter 50 mit Kopien des Sperrfilters 44 für die höchsten der drei Arbeitsfrequenzen und des Sperrfilters 47 für die niedrigsten der drei Arbeitsfrequenzen sowie einem Ausgangsverstärker 51 in Reihe geschaltet. So wird an dem zusätzlichem Signalausgang 49 das dritte Teilsignal mit der mittleren der drei Arbeitsfrequenzen ausgegeben. In den Signalpfaden zu den Signalausgängen 41 und 42 sind zusätzliche Sperrfilter 52 für die mittlere der drei Arbeitsfrequenzen angeordnet, um auch diese von den an den Ausgangsanschlüssen 41 und 42 ausgegebenen Teilsignalen mit der niedrigsten bzw. der höchsten der beiden Arbeitsfrequenzen auszulöschen.

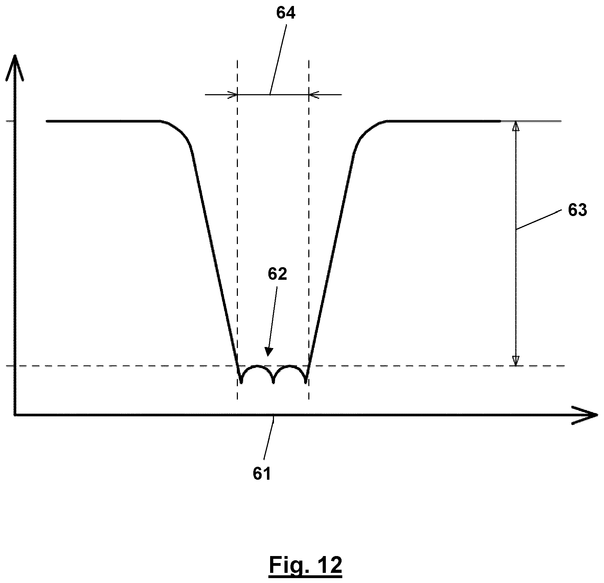

Die Sperrfilter 44, 47, 52 gemäß den Fig. 9 und 10 sind vorzugsweise Sperrfilter größerer Breite und bestehen dazu jeweils aus einer Gruppe von drei einzelnen Kerbfiltern, wie dies für das Sperrfilter 47 in **Fig. 11** dargestellt ist. Ein Kerbfilter 53 mit einer mittleren Filterfrequenz 61 ist mit einem Kerbfilter 54 mit einer etwas nach unten verschobenen Filterfrequenz und einem Kerbfilter 55 mit einer etwas nach oben verschobenen Filterfrequenz in Reihe geschaltet. In der Summe ergibt sich ein Transmissionsspektrum oder eine Filterfunktion des Sperrfilters 47 wie in **Fig. 12** dargestellt mit einem Sperrbereich 62 großer Dämpfung 63 und Breite 64 um die mittlere Filterfrequenz 61, in dessen Bereich das Sperrfilter 47 das Empfangssignal stark unterdrückt. Konkret kann die Dämpfung 63 des Sperrbereichs im Bereich von - 70 dBc bis - 60 dBc liegen, und die Breite 64 kann gleichzeitig 10 % bis 20 % der mittleren Filterfrequenz 61 betragen.

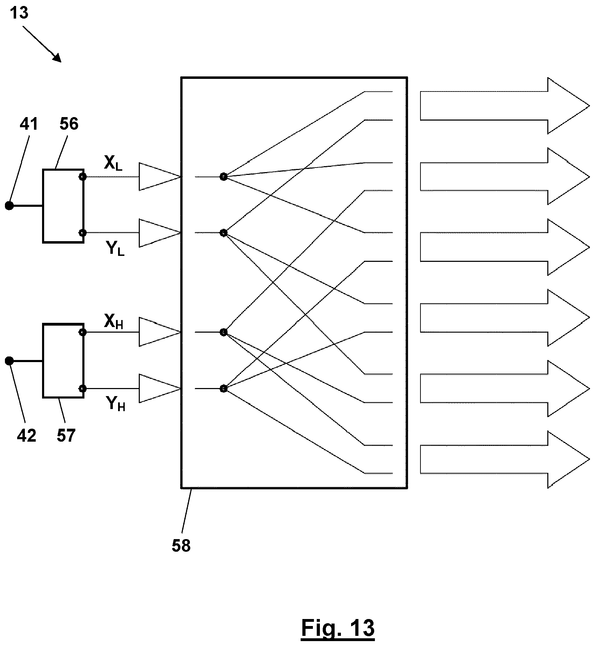

**Fig. 13** illustriert einen Teil der Auswerteeinrichtung 13 der Vorrichtung 1, soweit diese bei zwei Arbeitsfrequenzen arbeitet. Die von den Signalausgängen 41 und 42 gemäß Fig. 9 erhaltenen Teilsignale werden von Demodulatoren 56 und 57 mit Hilfe eines Referenzsignals von der jeweiligen Arbeitsfrequenz demoduliert. Das Ergebnis sind zeitliche Verläufe von Quadraturkomponenten mit den Werten x_{L} und y_{L} bei der niedrigeren Arbeitsfrequenz und x_{H} und y_{H} bei der höheren Arbeitsfrequenz, woraus sich Phase und Amplitude des jeweiligen Teilsignals zu bestimmten Zeitpunkten rekonstruieren lassen, die bestimmten Relativpositionen des Gegenstand 3 gegenüber der Vorrichtung 1 gemäß Fig. 1 entsprechen. In einer Einheit 58 der Auswerteeinrichtung 13 werden die Einzelwerte zeit- bzw. positionsabhängig zueinander in Beziehung gesetzt. Damit liegt eine erweiterte Datenbasis für die Detektion metallischer Objekte 2 in und an den Gegenständen 3 vor, die ein Erkennen der metallischen Objekte 2 auch dann erlaubt, wenn die Gegenstände selbst elektrisch leitfähig sind oder andere ausgeprägte elektrische oder dielektrische Eigenschaften aufweisen und daher selbst das mit der Sendespule 7 hervorgerufene magnetische Wechselfeld stark beeinflussen. Nicht angedeutet ist in Fig. 13, dass alternativ oder zusätzlich zu den direkt aus den Teilsignalen berechneten Werten auch Werte von Differenzsignalen zwischen den Teilsignalen, wie sie bei einem aktuellen Gegenstand 3 auftreten, und Teilsignalen, wie sie bei einem Referenzgegenstand ohne metallisches Objekt 2 auftreten, ausgewertet werden können.

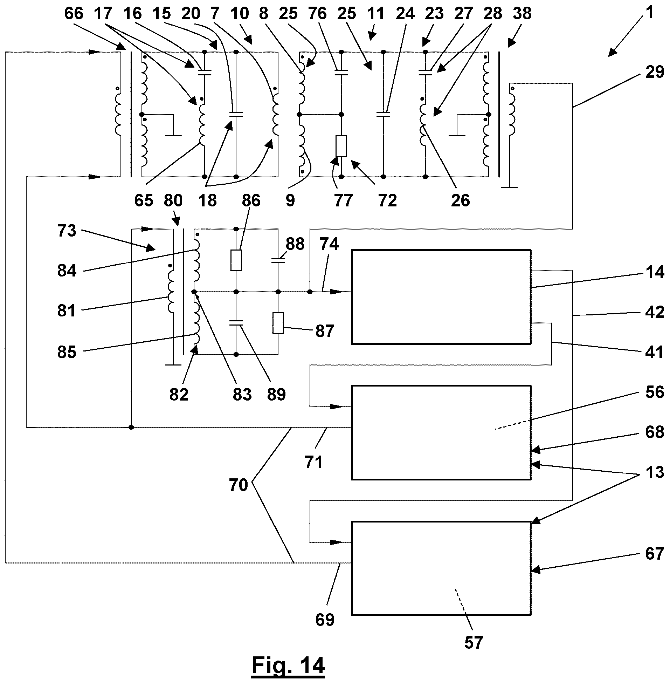

Die in **Fig. 14** dargestellte Ausführungsform der Vorrichtung 1 weist die Empfangseinrichtung 11 mit dem Schwingkreis 23 und dem Transformator 38 gemäß Fig. 3 und die Sendeeinrichtung 10 in entsprechender Ausgestaltung mit Anordnung der Sendespule 7 zusammen mit dem Kondensator 20 in dem Parallelschwingkreis 18 und eine weitere Spule 65 zusammen mit dem Kondensator 16 in dem Reihenschwingkreis 17 auf. Ein Transformator 66 dient dabei zur Einkopplung eines Anregungssignals 70. Das Anregungssignal 70 kommt zu einem Teil 69 von einer ersten Elektronik 67 und zu einem anderen Teil 71 von einer zweiten Elektronik 68. Die Elektronik 67 umfasst unter anderem den Demodulator 57, während die zweite Elektronik 68 den Demodulator 56 gemäß Figur 13 umfasst. Die Elektroniken 67 und 68 bilden somit die Auswerteeinrichtung 13 aus. Darüber hinaus umfassen sie Wechselspannungsquellen für den Teil 69 des Anregungssignals 70 für die Sendeeinrichtung 10, der die höhere der beiden Arbeitsfrequenzen aufweist, und für den Teil 71 des Anregungssignals 70, der die niedrigere der beiden Arbeitsfrequenzen aufweist. Des Weiteren zeigt Fig. 14 zwei Abgleicheinrichtungen 72 und 73. Die Abgleicheinrichtungen 72 und 73 sind Teil der Empfangseinrichtung 11 und dienen dazu, das Empfangssignal an einem Signalausgang 74 bei beiden Arbeitsfrequenzen gegen null abzugleichen, bevor das mit der Sendespule 7 erzeugte Wechselfeld von einem auf ein metallisches Objekt zu untersuchenden Gegenstand beeinflusst wird. In der vorliegenden Ausführungsform umfasst die Abgleicheinrichtung 72 für die höhere der beiden Arbeitsfrequenzen mindestens einen Kondensator oder einen ohmschen Widerstand, der mit einer der beiden Empfangsspulen 8 bzw. 9 parallelgeschaltet ist. Dargestellt ist in Fig. 14 ein mit der Empfangsspule 8 parallelgeschalteter Kondensator 76 und ein mit der Empfangsspule 9 parallelgeschalteter ohmschen Widerstand 77. Der Kondensator 76 und der ohmsche Widerstand 77 müssen nicht beide vorhanden sein. Die Positionen des Kondensators 76 und des ohmschen Widerstands 77 können getauscht sein und/oder zumindest einer der Empfangsspulen 8 und 9 kann sowohl ein Kondensator als auch ein ohmscher Widerstand parallelgeschaltet sein. Mit dem parallelgeschalteten Kondensator und/oder ohmschen Widerstand gleicht die Abgleichschaltung 72 Unterschiede der beiden Empfangsspulen 8 und 9 bei der höheren der beiden Arbeitsfrequenzen direkt innerhalb des Schwingkreises 23 der Empfangseinrichtung 11 aus. Die Abgleicheinrichtung 73 für die niedrigere der beiden Arbeitsfrequenzen weist einen Transformator 80 auf, an dessen Primärwicklung 81 der Teil 71 des Anregungssignals 70 zur Anregung der Sendeeinrichtung 10 bei der niedrigeren Arbeitsfrequenz anliegt. Die Sekundärwicklung 82 des Transformators 80 weist einen Mittelpunkt 83 und zwei gleiche Wicklungshälften 84 und 85 auf beiden Seiten des Mittelpunkts 83 auf. Der Mittelpunkt 83 ist an den Signalausgang 74 für das Empfangssignal angeschlossen. Dabei ist mindestens ein Kondensator oder ein ohmscher Widerstand mit einer der beiden Wicklungshälften 84 und 85 zu dem Signalausgang 74 hin parallel geschaltet. Um alle Optionen aufzuzeigen, ist in Fig. 14 dargestellt, dass der Wicklungshälfte 84 ein ohmscher Widerstand 86 und ein Kondensator 88 und der Wicklungshälfte 85 ein ohmscher Widerstand 87 und ein Kondensator 89 zu dem Signalausgang 74 hin parallel geschaltet sind. Die ohmschen Widerstände 86 und/oder 87 und/oder die Kondensatoren 88 und/oder 89 sind so dimensioniert, dass mit der Abgleicheinrichtung 73 dem Signalausgang 74 ein Abgleichssignal addiert wird, welches dem Empfangssignal bei der niedrigeren der beiden Arbeitsfrequenzen entgegen gerichtet ist, so dass dieses gegen null abgeglichen wird, so lange noch kein zu untersuchender Gegenstand das magnetische Wechselfeld der Sendespule 7 beeinflusst. Beide Abgleicheinrichtungen 72 und 73 gleichen praktische Unzulänglichkeiten der Messanordnung mit der Sendespule 7 und den Empfangsspulen 8 und 9 aus. Bei einer in jeder Beziehung idealen Messanordnung wären die Abgleicheinrichtungen 72 und 73 nicht erforderlich; bei jeder realen Messanordnung sind sie vorteilhaft.

### BEZUGSZEICHENLISTE

- 1: Vorrichtung
- 2: Objekt
- 3: Gegenstand
- 4: Schachtel
- 5: Produkt
- 6: Pfeil
- 7: Sendespule
- 8: Empfangsspule
- 9: Empfangsspule
- 10: Sendeeinrichtung
- 11: Empfangseinrichtung
- 12: Mittelanzapf
- 13: Auswerteeinrichtung
- 14: Filtereinrichtung
- 15: Schwingkreis
- 16: Kondensator
- 17: Reihenschwingkreis
- 18: Parallelschwingkreis
- 19: Spule
- 20: Kondensator
- 21: Anschluss
- 22: Anschluss
- 23: Schwingkreis
- 24: Kondensator
- 25: Parallelschwingkreis
- 26: Spule
- 27: Kondensator
- 28: Reihenschwingkreis
- 29: Anschluss
- 30: Anschluss
- 31: Teilkondensator
- 32: Teilkondensator
- 33: Spule
- 34: Schalter
- 35: Schalter
- 36: Kondensator
- 37: Kondensator
- 38: Transformator
- 39: Signaleingang
- 40: Eingangsverstärker
- 41: Signalausgang
- 42: Signalausgang
- 43: Tiefpassfilter
- 44: Sperrfilter
- 45: Ausgangsverstärker
- 46: Hochpassfilter
- 47: Sperrfilter
- 48: Ausgangsverstärker
- 49: Signalausgang
- 50: Bandpassfilter
- 51: Ausgangsverstärker
- 52: Sperrfilter
- 53: Kerbfilter
- 54: Kerbfilter
- 55: Kerbfilter
- 56: Demodulator
- 57: Demodulator
- 58: Einheit der Auswerteeinrichtung 13
- 59: Schalter
- 60: Spule
- 61: Mittlere Filterfrequenz
- 62: Sperrbereich
- 63: Dämpfung
- 64: Breite
- 65: Spule
- 66: Transformator
- 67: Erste Elektronik
- 68: Zweite Elektronik
- 69: Teil des Anregungssignals
- 70: Anregungssignal
- 71: Teil des Anregungssignals
- 72: Abgleicheinrichtung
- 73: Abgleicheinrichtung
- 74: Signalausgang
- 76: Kondensator
- 77: Ohmscher Widerstand
- 80: Transformator
- 81: Primärwicklung
- 82: Sekundärwicklung
- 83: Mittelpunkt der Sekundärwicklung 82
- 84: Wicklungshälfte der Sekundärwicklung 82
- 85: Wicklungshälfte der Sekundärwicklung 82
- 86: Ohmscher Widerstand
- 87: Ohmscher Widerstand
- 88: Kondensator
- 89: Kondensator

## Patentansprüche

1. Vorrichtung (1) zur Detektion von metallischen Objekten (2) in und an sich gegenüber der Vorrichtung (1) bewegenden Gegenständen (3) mit
- einer eine Sendespule (7) umfassenden Sendeeinrichtung (10), die dazu ausgebildet ist, mit der Sendespule (7) ein magnetisches Wechselfeld hervorzurufen, das mehrere Arbeitsfrequenzen aufweist,
- einer mindestens eine Empfangsspule (8, 9) umfassenden Empfangseinrichtung (11), die dazu ausgebildet ist, das von den sich bewegenden Gegenständen (3) beeinflusste magnetische Wechselfeld zu detektieren und ein von dem detektierten magnetischen Wechselfeld abhängiges Empfangssignal auszugeben,
- einer Filtereinrichtung (14), die dazu ausgebildet ist, Teilsignale, die jeweils einer der Arbeitsfrequenzen zugeordnet sind, aus dem Empfangssignal heraus zu filtern, und
- einer Auswerteeinrichtung (13), die dazu ausgebildet ist, die Teilsignale auszuwerten, **dadurch gekennzeichnet, dass**
- die Sendespule (7) Teil eines mehrfach resonanten Schwingkreises (15) der Sendeeinrichtung (10) ist, der bei jeder der mehreren Arbeitsfrequenzen eine Resonanzfrequenz aufweist, und/oder
- die mindestens eine Empfangsspule (8, 9) Teil eines mehrfach resonanten Schwingkreises (23) der Empfangseinrichtung (11) ist, der bei jeder der mehreren Arbeitsfrequenzen eine Resonanzfrequenz aufweist.

2. Vorrichtung (1) nach Anspruch 1, **dadurch gekennzeichnet, dass** jeder mehrfach resonante Schwingkreis (15, 23) miteinander verschaltete Teilschwingkreise aufweist.

3. Vorrichtung (1) nach Anspruch 2, **dadurch gekennzeichnet, dass** die miteinander verschalteten Teilschwingkreise einen Reihenschwingkreis (17, 28) und einen Parallelschwingkreis (18, 25) umfassen.

4. Vorrichtung (1) nach einem der vorhergehenden Ansprüche, **dadurch gekennzeichnet, dass** die Sendeeinrichtung (10) zwischen mehreren vorgegebenen Sätzen von Arbeitsfrequenzen umschaltbar ist.

5. Vorrichtung (1) nach Anspruch 4, **dadurch gekennzeichnet, dass** jeder mehrfach resonante Schwingkreis (15, 23) umschaltbar ist, um seine Resonanzfrequenzen auf den jeweiligen Satz von Arbeitsfrequenzen abzustimmen, indem Kapazitäten aller in dem jeweiligen mehrfach resonanten Schwingkreis (15, 23) miteinander verschalteten Teilschwingkreise zwischen vorgegebenen Werten umschaltbar sind.

6. Vorrichtung (1) nach einem der vorhergehenden Ansprüche, **dadurch gekennzeichnet, dass** jeder mehrfach resonante Schwingkreis (15, 23) bei jeder der mehreren Arbeitsfrequenzen einen Gütefaktor von mindestens 10 aufweist, wobei vorzugsweise der Gütefaktor bei der niedrigsten der mehreren Arbeitsfrequenzen mindestens 15 und der Gütefaktor bei der höchsten der mehreren Arbeitsfrequenzen mindestens 30 beträgt.

7. Vorrichtung (1) nach einem der vorhergehenden Ansprüche, **dadurch gekennzeichnet, dass** die Filtereinrichtung (14) dazu ausgebildet ist, jedes der Teilsignale, das einer der Arbeitsfrequenzen zugeordnet ist, bezüglich aller anderen der Arbeitsfrequenzen sperrzufiltern.

8. Vorrichtung (1) nach Anspruch 7, **dadurch gekennzeichnet, dass** die Filtereinrichtung (14) für jedes der Teilsignale und jede der anderen der Arbeitsfrequenzen ein Gruppe von Kerbfiltern (53, 54, 55) aufweist, von denen
- ein erstes Kerbfilter (53) eine vorzugsweise auf die jeweilige der anderen der Arbeitsfrequenzen abgestimmte erste mittlere Filterfrequenz aufweist,
- ein zweites Kerbfilter (54) eine zweite mittlere Filterfrequenz aufweist, die um 1 % bis 10 % niedriger als die erste mittlere Filterfrequenz ist, und
- ein drittes Kerbfilter (55) eine dritte mittlere Filterfrequenz aufweist, die um 1 % bis 10 % höher als die erste mittlere Filterfrequenz ist.

9. Vorrichtung (1) nach einem der vorhergehenden Ansprüche, **dadurch gekennzeichnet, dass** die Filtereinrichtung für jedes Teilsignal ein Bandpassfilter (50) oder ein Tiefpassfilter (43) oder ein Hochpassfilter (46) aufweist, wobei jede Kante des jeweiligen Filters einen Abstand von mindestens 10%, vorzugsweise von mindestens 20% und am meisten bevorzugt von mindestens 30 % der Arbeitsfrequenz zu der Arbeitsfrequenz einhält, der das jeweilige Teilsignal zugeordnet ist.

10. Vorrichtung (1) nach mindestens einem der vorhergehenden Ansprüche, **dadurch gekennzeichnet, dass** die Auswerteeinrichtung (13) dazu ausgebildet ist, jedes der Teilsignale mit einem Referenzsignal von derjenigen der mehreren Arbeitsfrequenzen, der das jeweilige Teilsignal zugeordnet ist, bezüglich enthaltener Phaseninformationen zu demodulieren.

11. Vorrichtung (1) nach einem der vorhergehenden Ansprüche, **dadurch gekennzeichnet, dass** die Empfangseinrichtung (11) zwei gleiche Empfangsspulen (8, 9) aufweist, die optional dieselbe Geometrie wie die Sendespule (7) aufweisen, die symmetrisch in zu der Sendespule (7) parallelen Ebenen angeordnet sind und die in der Empfangseinrichtung, optional in dem Schwingkreis (23) der Empfangseinrichtung (11) in Quadrupolkonfiguration in Reihe geschaltet sind.

12. Vorrichtung (1) nach Anspruch 10, **dadurch gekennzeichnet, dass** die Empfangseinrichtung (11) für jede der Arbeitsfrequenzen eine eigene Abgleicheinrichtung (72, 73) aufweist, die dazu ausgebildet ist, das Empfangssignal bei der jeweiligen Arbeitsfrequenz gegen null abzustimmen, wenn das magnetische Wechselfeld von den sich bewegenden Gegenständen (3) nicht beeinflusst ist.

13. Vorrichtung (1) nach Anspruch 11, **dadurch gekennzeichnet,**
- **dass** eine der Abgleicheinrichtungen (72) mindestens einen Kondensator (76) oder einen ohmschen Widerstand (77) aufweist, der mit einer der beiden Empfangsspulen (8, 9) parallelgeschaltet ist, und/oder
- **dass** eine andere der Abgleicheinrichtungen (73) einen Transformator (80) aufweist, an dessen Primärwicklung (81) ein Teil (71) eines Anregungssignals (70) zur Anregung der Sendeeinrichtung (10) bei der zugehörigen Arbeitsfrequenz anliegt und dessen Sekundärwicklung (82) zwei Wicklungshälften (84, 85) und einen Mittelpunkt (83) zwischen den beiden Wicklungshälften (84, 85) aufweist, wobei der Mittelpunkt (83) an einen Signalausgang (74) der Empfangseinrichtung (11) für das Empfangssignal angeschlossen ist und wobei mindestens ein Kondensator (88, 89) oder ein ohmscher Widerstand (86, 87) mit einer der Wicklungshälften (84, 85) der Sekundärwicklung (82) zu dem Signalausgang (74) hin parallel geschaltet ist.

14. Vorrichtung (1) nach einem der vorhergehenden Ansprüche, **dadurch gekennzeichnet, dass** die Auswerteeinrichtung (13) dazu ausgebildet ist, bei den mehreren Arbeitsfrequenzen erlangte Informationen miteinander in Beziehung zu setzen, um die metallischen Objekte (2) in den sich gegenüber der Vorrichtung (1) bewegenden Gegenständen (3) zu detektieren.

15. Vorrichtung (1) nach Anspruch 14, **dadurch gekennzeichnet, dass** die Auswerteeinrichtung (13) dazu ausgebildet ist, die bei den mehreren Arbeitsfrequenzen erlangten Informationen abhängig von einer Position des jeweiligen Gengenstand (3) gegenüber der Vorrichtung (1) oder abhängig von einem Zeitpunkt der Informationen miteinander in Beziehung zu setzen.
